# EUROPEAN PATENT APPLICATION

(11) **EP 4 571 022 A1**
(43) Date of publication of application: **18.06.2025**
(21) Application number: 23216853.4
(22) Date of filing: 14.12.2023
(51) Int. Cl.: E05B 53/00, E05B 63/14, E05C 1/14, B64D 11/04

(54) **LATCHING MECHANISM**

(71) Applicant: B/E Aerospace (UK) Limited, Leighton Buzzard, Bedfordshire LU7 4TB (GB)
(72) Inventor: KESKIN, VOLKAN, London (GB)
(74) Representative: Dehns

(57) **Abstract**

A latching mechanism for an aircraft galley, the aircraft galley comprising a door and a frame, the latching mechanism comprising: a latch bolt movable between a retracted position and an extended position, wherein the latch bolt is receivable by a latch striker to latch the aircraft galley door when the door is closed and the latch bolt is in the extended position; an actuator configured to move the latch bolt from the extended position to the retracted position; and a handle, wherein the handle is movable from a closed position to an open position to cause the actuator to move the latch bolt from the extended position to the retracted position, wherein the handle is configured to be pushed to move from the closed position to the open position.

## Description

### FIELD OF THE INVENTION

The invention relates to a latching mechanism, a latching system, an aircraft galley and an aircraft.

### BACKGROUND

Trolleys are used in aircraft to store items such as food and drink. Trolleys are stored in an aircraft galley and are removed from the aircraft galley to permit access to stored items and to move the trolleys around the aircraft, but they are retained in the aircraft galley at other times for safety. Aircraft galley doors are latched by latching mechanisms to retain a trolley inside the aircraft galley. It is desirable to improve the reliability of and reduce the space occupied by latching mechanisms.

### SUMMARY

In a first aspect there is provided a latching mechanism for an aircraft galley, the aircraft galley comprising a door and a frame, the latching mechanism comprising: a latch bolt movable between a retracted position and an extended position, wherein the latch bolt is receivable by a latch striker to latch the aircraft galley door when the door is closed and the latch bolt is in the extended position; an actuator configured to move the latch bolt from the extended position to the retracted position; and a handle, wherein the handle is movable from a closed position to an open position to cause the actuator to move the latch bolt from the extended position to the retracted position, wherein the handle is configured to be pushed to move from the closed position to the open position.

By having a handle which is pushed to retract the latch bolt, the handle need not be accessible for a user to pull the handle, which may reduce a requirement for

In an example, the grip is configured to be pulled by a user to open the door,

In an example, the grip is concealed when the handle is in the closed position.

In an example, the grip is exposed when the handle is in the open position.

In an example, the latching mechanism comprises a housing surrounding the handle.

In an example, the grip comprises a lip.

In an example, the lip is comprised in the housing.

In an example, the handle comprises a paddle and a pivot.

In an example, the paddle is rotatable about the pivot to move from the closed position to the open position.

In an example, the grip is positioned adjacent to a first portion of the paddle, the first portion on a first side of the pivot.

In an example, the first portion is configured to move inwardly when the handle is pushed.

In an example, the actuator is configured to connect to a second portion of the paddle, the second portion of the paddle on second side of the pivot.

In an example, the second portion is configured to move outwardly when the handle is pushed.

In an example, the actuator comprises a Bowden cable, wherein the Bowden cable is configured to transmit a force from the handle to the latch bolt to move the latch bolt from the extended position to the retracted position when the handle moves from the closed position to the open position.

In an example, the handle is not configured to project outwardly of an outer surface of the aircraft galley.

In an example, the handle is substantially flush with an outer surface of the aircraft galley.

In an example, the outer surface comprises a front face of a housing of the latching mechanism.

In an example, the outer surface comprises a front face of the door.

In an example, the latching mechanism comprises an additional latch bolt movable between a retracted position and an extended position.

In an example, the bias element is configured to bias the latch bolt towards the retracted position

According to a second aspect there is provided a latching system comprising the latching mechanism described above and the latch striker, wherein the latching mechanism is configured to be mounted to the door and the latch striker is configured to be mounted to the frame.

According to a third aspect there is provided an aircraft galley comprising the door, the frame and the latching system described above.

According to a fourth aspect there is provided an aircraft comprising the aircraft galley described above.

### BRIEF DESCRIPTION OF THE DRAWINGS

Various examples will now be described with reference to the accompanying drawings in which:
Fig. 1 shows a front view aircraft galley;
Fig. 2 shows a perspective view of a latching mechanism with a latch bolt in an extended position;
Fig. 3 shows a partial cut-away perspective view of a latching mechanism with a latch bolt in an extended position;
Fig. 4 shows a perspective view of a door with a latch bolt in an extended position;
Fig. 5 shows a perspective view of a door with a latch bolt in an extended position;
Fig. 6 shows a perspective view of a latching mechanism with a latch bolt in a retracted position;
Fig. 7 shows a cut-away view of a latching mechanism;
Fig. 8 shows a perspective view of a door with a latch bolt in a retracted position;
Fig. 9 shows a perspective view of a latching system.

### DETAILED DESCRIPTION

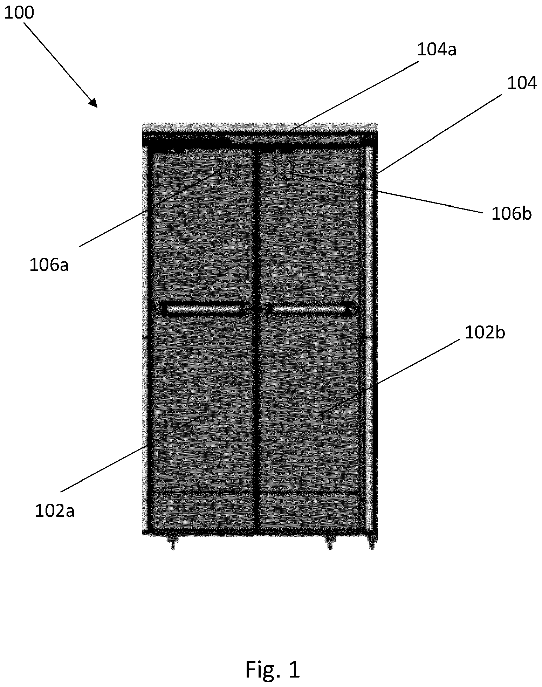

With reference to Fig. 1 there is shown an aircraft galley 100. The aircraft galley 100 comprises a first door 102a and a second door 102b.

The first door 102a covers a first opening, and the first door 102a may be opened (from the closed position shown in Fig. 1) to permit a trolley (not shown) to be inserted into the aircraft galley 100 through the first opening. The second door 102b covers a second opening, and the second door 102b may be opened (from the closed position shown in Fig. 1) to permit a trolley to be inserted into the aircraft galley 100 through the first opening. Each of the first door 102a and the second door 102b is an example of a door 102 as referred to in relation to later figures.

The aircraft galley 100 comprises a frame 104. The frame 104 supports the first door 102a and the second door 102b. When the first door 102a is in the closed position, the first door 102a abuts the frame 104. When the second door 102b in the closed position, the second door 102b abuts the frame 104.

The aircraft galley 100 comprises a first latching system. The first latching system comprises a first latching mechanism 106a, which is an example of a latching mechanism 106 as referred to in relation to later figures. As described below, the first latching mechanism 106a is configured to latch the first door 102a in the closed position. The first latching system comprises a first latch striker (not shown in Fig. 1), which is an example of the latch striker 110 referred to in relation to later figures.

The aircraft galley 100 further comprises a second latching mechanism 106b, which is an example of the latching mechanism 106 referred to in relation to later figures. The second latching mechanism 106b is configured to latch the second door 102b in the closed position. The second latching system comprises a second latch striker (not shown in Fig. 1), which is an example of the latch striker 110 referred to in relation to later figures.

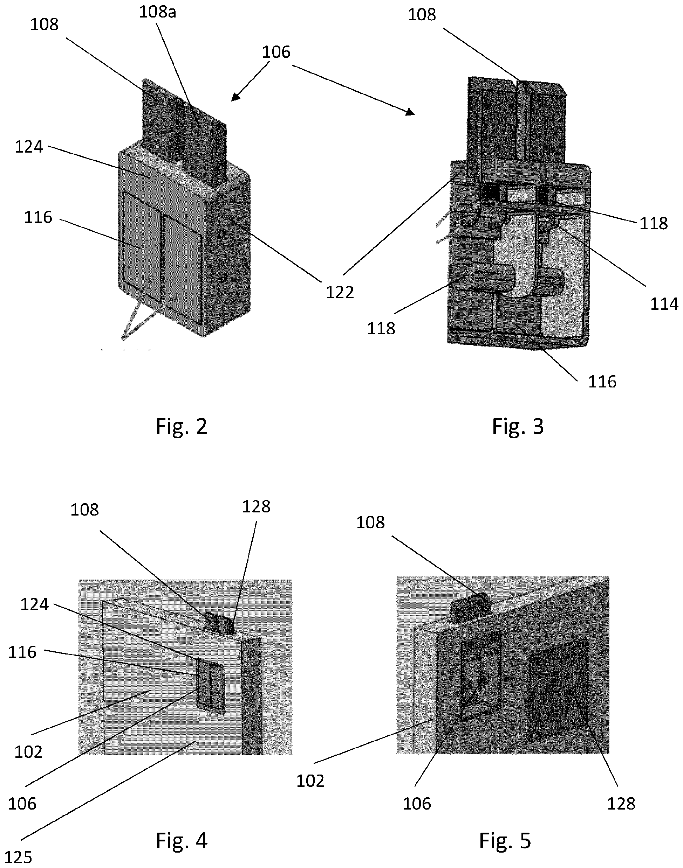

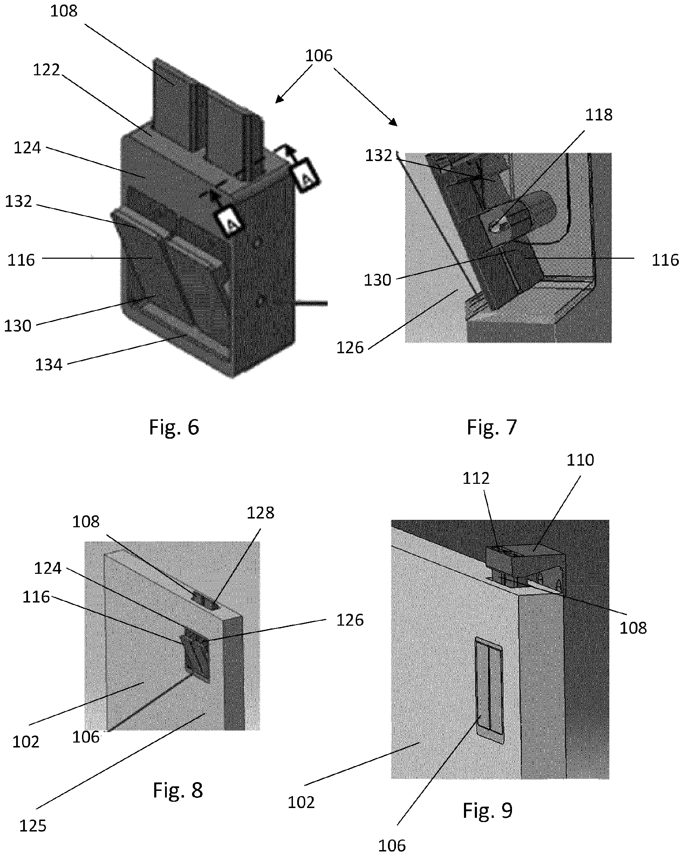

Referring to Fig. 2 to 8, the latching mechanism 106 is mounted to the door 102. The latching mechanism 106 comprises a latch bolt 108, which is movable between an extended position, as shown in Fig. 2 to 5, and a retracted position, as shown in Fig. 6 to 8. In the extended position, the latch bolt 108 extends away from the door 102 further than in the retracted position. The latch bolt 108 extends upwardly from the door 102 in use.

The latching system further comprises the latch striker 110, which is shown in Fig. 9. As described below, the latch striker 110 receives the latch bolt 108 when the door 102 is closed and the latch bolt 108 is in the extended position. The latching mechanism 106 thereby maintains the door 102 in the closed position. In the present example, the latch striker 110 is mounted to the frame 104 (though the frame is omitted from Fig. 9 for clarity). More specifically, the latch striker 110 is positioned in an upper part 104a of the frame. The latch striker 110 comprises a recess or aperture 112 to receive the latch bolt 108. When the latch bolt 108 is in the retracted position it does not reach the latch striker 110 and the door 102 is not latched.

The latching mechanism 106 further comprises an actuator 114. In the present example, the actuator 114 is a Bowden cable 114. The Bowden cable 114 comprises an inner cable and a cable housing (not shown). The inner cable is movable relative to the cable housing to transmit a force. As described in more detail below the actuator 114 is configured to move the latch bolt 108 from the extended position to the retracted position.

The latching mechanism 106 further comprises a handle 116 and a pivot 118. In the present example the handle 116 is a paddle 116. The paddle 116 is rotatable about the pivot 118 to move the paddle 116 from a closed position (shown in Fig. 2 to 5) to an open position (shown in Fig. 6 to 8). When the paddle 116 is in the closed position the latch bolt 108 is in the extended position. When the paddle 116 is in the open position the latch bolt 108 is in the retracted position. As described in more detail below, moving the handle 116 from the closed position to the open position causes the actuator 114 to move the latch bolt 108 from the extended position to the retracted position.

The paddle 116 comprises a first portion 130. In the present example the first portion 130 is positioned below the pivot 118 in use. The paddle 116 comprises a second portion 132. In the present example the second portion 132 is positioned above the pivot 118 in use. The first portion 130 and the second portion 132 are on opposing sides of the pivot 118.

The latching mechanism 106 comprises a bias element 120. The bias element 120 is configured to bias the latch bolt 108 towards the extended position. In the present example the bias element 120 is a spring.

The latching mechanism 106 comprises a housing 122, which contains components of the latching mechanism 106. The actuator 114, the paddle 116, the pivot 118 and the bias element 120 are contained within the housing 122. The housing 122 is substantially cuboidal. The latch bolt 108 extends away from the housing 122. The bias element 120 is configured to push against the housing 122 to bias the latch bolt 108 towards the extended position. In some examples the housing 122 is not present and/or some of the features of the latching mechanism 106 are positioned in a separate unit.

When the latch bolt 108 is in the extended position, the paddle 116 is in a closed position as shown in Fig. 2 to 5. In the closed position, the paddle 116 does not project outwardly (i.e. forwards from the front of the aircraft galley 100) from an outer surface (i.e. the front surface of the aircraft galley, for example, the furthest outwardly extending surface of the aircraft galley 100) of the aircraft galley 100. The paddle 116 extends outwardly to the same extent or less than the outer surface. In the present example, the paddle 116 extends outwardly to substantially the same extent as the outer surface. The paddle 116 is substantially flush with the outer surface. The outer surface comprises a front face 124 of the housing 122. The outer surface comprises a front face 125 of the door 102.

When the paddle 116 is in the closed position, the paddle 116 is substantially parallel to the front face 124 of the housing 122. The paddle 116 is substantially planar. The front face 124 of the housing 122 is substantially planar. In the closed position the first portion 130 of the paddle 116 is flush with the front face 124 of the housing 122. In the closed position the second portion 132 is flush with the front face 124 of the housing 122.

When the paddle 116 is in the closed position, the paddle 116 is substantially parallel to the front face 125 of the door 102. The front face 125 of the door 102 is substantially planar. In the closed position the first portion 130 of the paddle 116 is flush with the front face 125 of the door 102. In the closed position the second portion 132 is flush with the front face 125 of the door 102.

The paddle 116 sits in a housing aperture 126 in the front face 124 of the housing 122. The paddle 116 substantially fills the housing aperture 126. There is insufficient space for a user's finger to be inserted into the housing aperture 126 around the paddle 116 when the paddle is in the closed position. In the closed position the first portion 130 of the paddle 116 is flush with the housing 122. In the closed position the second portion 132 is flush with the housing 122.

The latch unit 106 is received in a door aperture 127. The door aperture 127 extends through the door 102 from the door's front face to its rear face. The housing 122 is of substantially the same thickness as the door 102. The housing 122 comprises a rear face 128. The rear face 128 is removable to expose the interior of the housing 122, as shown in Fig. 5. When the housing 122 is received in the door aperture 127, the latch bolt 108 extends through a latch aperture 128. The latch bolt 108 extends beyond the door 102 through the latch aperture 128.

In some examples, the housing 122 may be omitted and the paddle 116 may be mounted directly into the door 102. In such examples, there may be insufficient space for a user's finger to be inserted around the paddle 116 when the paddle is in the closed position. Generally, there may be insufficient space around the paddle 116 for a user's finger to be inserted.

The actuator 114 is configured to move the latch bolt 108 to the retracted position when the paddle 116 is moved to the open position. The actuator 114 connects to the paddle 116. The actuator 114 connects to the latch bolt 108. The actuator 114 is configured to apply a force to the latch bolt 108 when a force is applied to the paddle 116. The inner cable of the Bowden cable 114 is connected to the paddle 116. The inner cable of the Bowden cable 114 is connected to the latch bolt 108. The inner cable of the Bowden cable 114 is connected to the second portion 132.

The latching mechanism 106 comprises a grip 134. The grip 134 comprises a lip 134. The lip 134 is formed in the housing 122, more specifically the front face 124 of the housing 122. When the paddle 116 is moved from the closed position to the open position, the first portion 130 moves inwardly. When the paddle 116 is in the open position, the grip is exposed and accessible to the user. When the paddle 116 is in the closed position, the grip 134 is concealed and is not accessible to the user. The grip 134 is formed on an edge of the housing 122 adjacent to the paddle 116. The grip 134 is formed on an edge of the housing at a first end of the paddle 116. The first end is part of the first portion 130. The first end is the part of the first portion 130 that is furthest from the pivot 118.

In other examples (e.g. where the housing 122 is omitted) the grip 134 is formed in the door 102.

In use, when the door 102 is closed and the latch bolt 108 is extended, in order to open the door 102, the user moves the handle 116 from the closed position to the open position. As described above, in order to this, the user pushes the handle 116, more specifically, the first portion 130 of the paddle 116.

Moving the handle 116 from the closed position to the open position causes the actuator 114 to move the latch bolt 108 from the extended position to the retracted position. In the present example, outward movement of the second portion 130 applies a force to the latch bolt 108 via the inner cable of the Bowden cable 114. The force overcomes the bias element 118 and the latch bolt 108 moves to the retracted position.

Additionally, moving the handle 116 from the closed position to the open position causes the grip 134 to be exposed. Inward movement of the first portion 130 on moving the handle 116 from the closed position to the open position causes displacement between the paddle 116 and the housing 122, such that the user can access the grip 134. The user then exerts a pulling force on the grip to open the door 102.

The latching mechanism 106 comprises an additional latch bolt 108a, which functions in the same manner and has the same features as the latch bolt 108, with repeated description of those features being omitted. The additional latch bolt 108a is displaced from and adjacent to the latch bolt 108. The latch striker 110 is configured to receive the latch bolt 108 and the additional latch bolt 108a.

In some examples, the latch bolt and latch striker may be reversed, such that the latch bolt is mounted to the frame and the latch striker mounted to the door.

Various aspects of the apparatus and methods disclosed in the various embodiments may be used alone, in combination, or in a variety of arrangements not specifically discussed in the embodiments described in the foregoing, and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A latching mechanism for an aircraft galley, the aircraft galley comprising a door and a frame, the latching mechanism comprising:
a latch bolt movable between a retracted position and an extended position, wherein the latch bolt is receivable by a latch striker to latch the aircraft galley door when the door is closed and the latch bolt is in the extended position;
an actuator configured to move the latch bolt from the extended position to the retracted position; and
a handle, wherein the handle is movable from a closed position to an open position to cause the actuator to move the latch bolt from the extended position to the retracted position,
wherein the handle is configured to be pushed to move from the closed position to the open position.

2. A latching mechanism according to claim 1 and comprising a grip, the grip configured to be pulled by a user to open the door, wherein the grip is concealed when the handle is in the closed position, wherein the grip is exposed when the handle is in the open position.

3. A latching mechanism according to claim 2, and comprising a housing surrounding the handle, wherein the grip comprises a lip, wherein the lip is comprised in the housing.

4. A latching mechanism according to any preceding claim, wherein the handle comprises a paddle and a pivot, the paddle rotatable about the pivot to move from the closed position to the open position.

5. A latching mechanism according to claim 4 when dependent on claim 2, wherein the grip is positioned adjacent to a first portion of the paddle, the first portion on a first side of the pivot and configured to move inwardly when the handle is pushed.

6. A latching mechanism according to claim 4 or 5, wherein the actuator is configured to connect to a second portion of the paddle, the second portion of the paddle on second side of the pivot and configured to move outwardly when the handle is pushed.

7. A latching mechanism according to any preceding claim, wherein the actuator comprises a Bowden cable, wherein the Bowden cable is configured to transmit a force from the handle to the latch bolt to move the latch bolt from the extended position to the retracted position when the handle moves from the closed position to the open position.

8. A latching mechanism according to any preceding claims, wherein the handle is not configured to project outwardly of an outer surface of the aircraft galley.

9. A latching mechanism according to claim 8, wherein the handle is substantially flush with an outer surface of the aircraft galley.

10. A latching mechanism according to claim 8 or 9, wherein the outer surface comprises a front face of a housing of the latching mechanism.

11. A latching mechanism according to any of claims 8 to 10, wherein the outer surface comprises a front face of the door.

12. A latching mechanism according to any of the preceding claims and comprising a bias element configured to bias the latch bolt towards the retracted position.

13. A latching system comprising the latching mechanism according to any of the preceding claims and the latch striker, wherein the latching mechanism is configured to be mounted to the door and the latch striker is configured to be mounted to the frame.

14. An aircraft galley comprising the door, the frame and the latching system of claim 14.

15. An aircraft comprising the aircraft galley of claim 14.
